# EUROPEAN PATENT APPLICATION

(11) **EP 4 607 891 A1**
(43) Date of publication of application: **27.08.2025**
(21) Application number: 23899921.3
(22) Date of filing: 04.12.2023
(51) Int. Cl.: H04L 67/1074

(54) **WIRED SERIAL BUS DATA TRANSMISSION METHOD AND SYSTEM, AND RELATED APPARATUS**

(30) Priority: 09.12.2022 CN 202211581602
(71) Applicant: Huawei Technologies Co., Ltd., Shenzhen, Guangdong 518129 (CN)
(72) Inventor: LIU, Xiao, Shenzhen, Guangdong 518129 (CN); FANG, Ping, Shenzhen, Guangdong 518129 (CN); XIA, Jing, Shenzhen, Guangdong 518129 (CN); ZHOU, Xiping, Shenzhen, Guangdong 518129 (CN)
(74) Representative: Huawei European IPR
(86) International application number: PCT/CN2023/136181
(87) International publication number: WO 2024/120344

(57) **Abstract**

Embodiments of this application provide a method and system for data transmission over a wired serial bus, and a related apparatus. The method for data transmission over the wired serial bus is applied to a transmitter, and the method includes: generating a first data link layer packet, where the first data link layer packet includes at least one block Block each including a header Header and a body Body, the header includes packet type information indicative of a packet type to which the block belongs, and the packet type is one of a control packet, a data packet transmitted across networks, and a data packet transmitted not across networks, and sending the first data link layer packet. According to embodiments of this application, data transmission both in a local network and across IP networks can be implemented.

## Description

This application claims priority to Chinese Patent Application No. 202211581602.1, with the China National Intellectual Property Administration on December 9, 2022 and entitled "METHOD AND SYSTEM FOR DATA TRANSMISSION OVER WIRED SERIAL BUS, AND RELATED APPARATUS", which is incorporated herein by reference in its entirety.

### TECHNICAL FIELD

This application relates to the field of wired communication technologies, and in particular, to a method and system for data transmission over a wired serial bus, and a related apparatus.

### BACKGROUND

Currently, to meet a requirement of high-performance heterogeneous computing, a high-speed differential bus like a peripheral interface (Peripheral Component Interface Express, PCIe) is used for devices targeted for data center and computing cluster scenarios, so as to implement end-to-end transmission. By virtue of high performance, high scalability, high reliability, and excellent compatibility, the PCIe almost replaces all previous internal buses. With development of distributed computing, there are more scenarios requiring computing data transmission across Internet protocol (Internet Protocol, IP) networks. Therefore, a design of a new computing bus needs to meet the cross-IP network scenario, to implement high-performance and low-latency connection and cache coherence maintenance of a device across IP networks, and support the IP networks in a bus network. However, an original design of the high-speed differential bus PCIe is mainly for interconnect express in a computing system, and cannot implement interconnection and memory consistency maintenance of PCIe devices across IP networks.

Therefore, how to efficiently transmit computing data in a local network and across IP networks in a high-performance computing scenario is an urgent problem to be resolved.

### SUMMARY

Embodiments of this application provide a method and system for data transmission over a wired serial bus, and a related apparatus, to efficiently transmit computing data in a local network and across IP networks.

According to a first aspect, an embodiment of this application provides a method for data transmission over a wired serial bus, applied to a transmitter. The method includes: generating a first data link layer packet, where the first data link layer packet includes at least one block Block each including a header Header and a body Body, the header includes packet type information indicative of a packet type to which the block belongs, and the packet type is one of a control packet, a data packet transmitted across networks, and a data packet transmitted not across networks; and sending the first data link layer packet.

In conventional technologies, data transmission over a wired serial bus can be performed only in a local network, and cannot be performed across IP networks. Consequently, high-performance and low-latency connection and cache coherence maintenance in a cross-IP network application scenario cannot be met. In view of this, an embodiment of this application provides the method for data transmission over the wired serial bus, applied to the transmitter, so that both data transmission in a local network and data transmission across IP networks can be implemented, and high-performance and low-latency connection and cache coherence maintenance between different ends or different node devices are implemented. According to the method for data transmission over the wired serial bus in embodiments of this application, a segmented data link layer packet (namely, the first data link layer packet) may be transmitted over the wired serial bus. The segmented data link layer packet includes at least one block, and each block includes the header Header and the body Body. The header includes the packet type information, and the packet type information may indicate the packet type to which the corresponding block belongs, and may further indicate the packet type corresponding to the segmented data link layer packet. Therefore, a receiver can identify, based on the packet type, that the data link layer packet is the control packet, a data link layer packet in a local network (namely, the data packet transmitted not across networks), or a data link layer packet transmitted across IP networks (namely, the data packet transmitted across networks). Further, the receiver may perform corresponding processing on the received data link layer packet based on the identified packet type, to implement end-to-end transmission across networks or in the local network. In addition, in embodiments of this application, a packet format of the data link layer packet transmitted across networks is the same as a packet format of the data link layer packet transmitted not across networks, to greatly reduce complexity of a system for data transmission over a wired serial bus. In addition, because the data link layer packet provided in embodiments of this application is a segmented data link layer packet, the blocks may be separately sent, to ensure quality of service when the data link layer packet is transmitted over the wired serial bus.

In a possible implementation, each block includes one or more flits Flits, a 1^{st} flit in each block includes the header and a first check code, and a last flit in each block includes a second check code. The first check code is used to check information in the corresponding 1^{st} flit other than the first check code, and the second check code is used to check information in the corresponding block other than the 1^{st} flit and the second check code.

In embodiments of this application, each block in the data link layer packet includes one or more flits, the 1^{st} flit in each block includes the header and the first check code, and the last flit includes the second check code. The receiver may check a corresponding block based on the first check code and the second check code. Therefore, if a quality problem like a loss, repetition, or an error occurs in the block received by the receiver during transmission, the data link layer packet or the block is to be resent, to ensure quality of service during transmission.

In a possible implementation, the header in each block further includes a virtual lane number indicative of a corresponding virtual lane over which the block is transmitted.

In embodiments of this application, the header (namely, the header in the 1^{st} flit) in each block further includes the virtual lane number indicative of the corresponding virtual lane over which the block is transmitted. The virtual lane may be one or more virtual lanes obtained through division based on a physical link between the transmitter and the receiver. Each of the virtual lanes may be used to transmit the data link layer packet, and each of the virtual lanes may correspond to a different packet transmission rate and/or a different packet buffer size. Therefore, the virtual lane number in the block is identified, and the block is sent to the receiver over the corresponding virtual lane, to ensure a transmission rate of the block and quality of service during transmission.

In a possible implementation, a 1^{st} flit in a 1^{st} block in the at least one block further includes first length information and second length information, the first length information indicates that a quantity of blocks in the at least one block is M, the second length information indicates that a quantity of flits in a last block is N, M is a positive integer, and N is a positive integer.

In embodiments of this application, the 1^{st} flit in the first block in the data link layer packet further includes the first length information and the second length information, and the first length information and the second length information respectively indicate the quantity of blocks and the quantity of flits in the last block. The first length information and the second length information carried in the 1^{st} flit in the first block can ensure integrity and accuracy of the received data link layer packet, to ensure quality of service during data transmission. In addition, the first length information and the second length information may be included in the header in the 1^{st} flit in the first block.

In a possible implementation, 1^{st} flit in the 1^{st} block further includes third length information, the third length information indicates that a length of a payload in an N^{th} flit or an (N-1)^{th} flit in the last block is L bytes, and L is a positive integer. When L is greater than or equal to a first threshold and less than or equal to a second threshold, the third length information indicates that the length of the payload in the N^{th} flit in an M^{th} block is L bytes; and when L is greater than or equal to a third threshold and less than or equal to a fourth threshold, the third length information indicates that the length of the payload in the (N-1)^{th} flit in the M^{th} block is L bytes.

In embodiments of this application, the data link layer packet is a segmented packet, each block includes one or more flits each with a same size. Therefore, the 1^{st} flit in the first block in the data link layer packet further includes the third length information indicative of the length of the payload in the last flit or the last but one flit in different cases. The third length information can be used to ensure integrity and accuracy of the received data link layer packet, to further ensure quality of service during data transmission.

In a possible implementation, a corresponding length between the third threshold and the fourth threshold is the same as a length of the second check code.

Because all the flits have a same size, when the length of the payload indicated by the third length information is between the third threshold and the fourth threshold, it indicates that including the payload of the length in the last flit cannot ensure integrity of the second check code. Therefore, the payload of the length is carried in the last but one flit, and the second check code is carried in the last flit, to ensure integrity of the second check code. Correspondingly, in embodiments of this application, a value between the third threshold and the fourth threshold may be equivalent to a value of the second check code, to ensure integrity of the second check code.

In a possible implementation, M is greater than 1, and the method further includes: generating a second data link layer packet, where packet type information of the second data link layer packet indicates that the second data link layer packet is the control packet. Sending the first data link layer packet includes: separately sending the M blocks and the second data link layer packet, where the second data link layer packet is sent after an i^{th} block and before an (i+1)^{th} block, where i is a positive integer greater than or equal to 1 and less than M.

In embodiments of this application, because the data link layer packet provided in embodiments of this application is a segmented data link layer packet, blocks may be separately sent. Therefore, in a process of sending the first data link layer packet in blocks, after a current block is sent, in comparison with continuing to send a next block, the control packet (namely, the second data link layer packet) may be preferentially sent based on a sending status, and a remaining block in the first data link layer packet continues to be sent after the control packet is sent. In this manner, the receiver can receive the control packet as soon as possible to maintain or manage a transmission link between the transmitter and the receiver, to implement efficient data transmission.

In a possible implementation, the control packet includes a network layer control packet or a data link layer control packet, the network layer control packet is used to control a network layer link of the wired serial bus, and the data link layer control packet is used to control a data link layer link of the wired serial bus.

In embodiments of this application, when the data link layer packet is the control packet, the control packet may be classified into two types: the network layer control packet and the data link layer control packet, so that the control packet can correspondingly complete status management, credit flow control, parameter exchange, power management, retransmission, and other functions of the data link layer link or the network layer link.

In a possible implementation, the data packet transmitted across networks includes an Internet protocol version IPv4 protocol packet or an IPv6 protocol packet.

In embodiments of this application, the segmented data packet transmitted across networks may include either the Internet Protocol version IPv4 protocol packet or the IPv6 protocol packet, so that the data packet transmitted across networks is applicable to different network protocols such as an IPv4 protocol, an IPv6 protocol, or another network protocol.

According to a second aspect, an embodiment of this application provides a method for data transmission over a wired serial bus, applied to a receiver. The method includes: receiving a first data link layer packet, where the first data link layer packet includes at least one block Block each including a header Header and a body Body, the header includes packet type information indicative of a packet type to which the block belongs, and the packet type is one of a control packet, a data packet transmitted across networks, and a data packet transmitted not across networks, and processing the first data link layer packet based on the packet type information.

In conventional technologies, data transmission over a wired serial bus can be performed only in a local network, and cannot be performed across IP networks. Consequently, high-performance and low-latency connection and cache coherence maintenance in a cross-IP network application scenario cannot be met. In view of this, according to the method for data transmission over the wired serial bus that is provided in embodiments of this application and that is applied to the receiver, a segmented data link layer packet (namely, the first data link layer packet) may be transmitted over the wired serial bus. The segmented data link layer packet includes at least one block, and each block includes the header Header and the body Body. The header includes the packet type information, and the packet type information may indicate the packet type to which the corresponding block belongs, and may further indicate the packet type corresponding to the segmented data link layer packet. Therefore, the receiver can identify, based on the packet type, that the data link layer packet is the control packet, a data link layer packet in a local network (namely, the data packet transmitted not across networks), or a data link layer packet transmitted across IP networks (namely, the data packet transmitted across networks). Further, the receiver may perform corresponding processing on the received data link layer packet based on the identified packet type, to implement transmission across networks or in the local network between different ends or different node devices. In addition, in embodiments of this application, a packet format of the data link layer packet transmitted across networks is the same as a packet format of the data link layer packet transmitted not across networks, to greatly reduce complexity of a system for data transmission over a wired serial bus.

In a possible implementation, each block includes one or more flits Flits, a 1^{st} flit in each block includes the header and a first check code, and a last flit in each block includes a second check code. The first check code is used to check information in the corresponding 1^{st} flit other than the first check code, and the second check code is used to check information in the corresponding block other than the 1^{st} flit and the second check code.

In a possible implementation, the header in each block further includes a virtual lane number indicative of a corresponding virtual lane over which the block is transmitted.

In a possible implementation, a 1^{st} flit in a 1^{st} block in the at least one block further includes first length information and second length information, the first length information indicates that a quantity of blocks in the at least one block is M, the second length information indicates that a quantity of flits in a last block is N, M is a positive integer, and N is a positive integer.

In a possible implementation, 1^{st} flit in the 1^{st} block further includes third length information, the third length information indicates that a length of a payload in an N^{th} flit or an (N-1)^{th} flit in the last block is L bytes, and L is a positive integer. When L is greater than or equal to a first threshold and less than or equal to a second threshold, the third length information indicates that the length of the payload in the N^{th} flit in an M^{th} block is L bytes; and when L is greater than or equal to a third threshold and less than or equal to a fourth threshold, the third length information indicates that the length of the payload in the (N-1)^{th} flit in the M^{th} block is L bytes.

In a possible implementation, a corresponding length between the third threshold and the fourth threshold is the same as a length of the second check code.

In a possible implementation, M is greater than 1, and the method further includes: after receiving an i^{th} block sent by a first end and before receiving an (i+1)^{th} block sent by the first end, receiving a second data link layer packet sent by the first end, where packet type information of the second data link layer packet indicates that the second data link layer packet is the control packet, and i is a positive integer greater than or equal to 1 and less than M.

In a possible implementation, the control packet includes a network layer control packet or a data link layer control packet. Processing the first data link layer packet based on the packet type information includes: identifying the packet type indicated by the packet type information; and when the packet type indicated by the packet type information is the network layer control packet, controlling a network layer link of the wired serial bus based on the first data link layer packet; or when the packet type indicated by the packet type information is the data link layer control packet, controlling a data link layer link of the wired serial bus based on the first data link layer packet.

In a possible implementation, the data packet transmitted across networks includes an Internet protocol version IPv4 protocol packet or an IPv6 protocol packet. Processing the first data link layer packet based on the packet type information includes: identifying the packet type indicated by the packet type information; and when the packet type indicated by the packet type information is the Internet protocol version IPv4 protocol packet, forwarding the first data link layer packet according to an IPv4 protocol; or when the packet type indicated by the packet type information is the IPv6 protocol packet, forwarding the first data link layer packet according to an IPv6 protocol.

It should be understood that the method for data transmission over the wired serial bus provided in the second aspect of this application is consistent with the technical solution in the first aspect of this application. For specific content and beneficial effect of the method for data transmission over the wired serial bus provided in the second aspect, refer to the method for data transmission over the wired serial bus provided in the first aspect. Details are not described herein again.

According to a third aspect, an embodiment of this application provides a system for data transmission over a wired serial bus. The system includes a transmitter and a receiver, and the transmitter and the receiver perform data transmission over the wired serial bus. The transmitter is configured to implement the method for data transmission over the wired serial bus in the first aspect, and the receiver is configured to implement the method for data transmission over the wired serial bus in the second aspect.

It should be understood that the system for data transmission over the wired serial bus provided in the third aspect of this application is consistent with the technical solution in the first aspect or the second aspect of this application. For specific content and beneficial effect of the system for data transmission over the wired serial bus, refer to the method for data transmission over the wired serial bus provided in the first aspect or the second aspect. Details are not described herein again.

According to a fourth aspect, an embodiment of this application provides an apparatus for data transmission over a wired serial bus. The apparatus is used in a transmitter, and the apparatus includes:
a first generation unit, configured to generate a first data link layer packet, where the first data link layer packet includes at least one block Block each including a header Header and a body Body, the header includes packet type information indicative of a packet type to which the block belongs, and the packet type is one of a control packet, a data packet transmitted across networks, and a data packet transmitted not across networks; and a sending unit, configured to send the first data link layer packet.

In a possible implementation, each block includes one or more flits Flits, a 1^{st} flit in each block includes the header and a first check code, and a last flit in each block includes a second check code. The first check code is used to check information in the corresponding 1^{st} flit other than the first check code, and the second check code is used to check information in the corresponding block other than the 1^{st} flit and the second check code.

In a possible implementation, the header in each block further includes a virtual lane number indicative of a corresponding virtual lane over which the block is transmitted.

In a possible implementation, a 1^{st} flit in a 1^{st} block in the at least one block further includes first length information and second length information, the first length information indicates that a quantity of blocks in the at least one block is M, the second length information indicates that a quantity of flits in a last block is N, M is a positive integer, and N is a positive integer.

In a possible implementation, 1^{st} flit in the 1^{st} block further includes third length information, the third length information indicates that a length of a payload in an N^{th} flit or an (N-1)^{th} flit in the last block is L bytes, and L is a positive integer. When L is greater than or equal to a first threshold and less than or equal to a second threshold, the third length information indicates that the length of the payload in the N^{th} flit in an M^{th} block is L bytes; and when L is greater than or equal to a third threshold and less than or equal to a fourth threshold, the third length information indicates that the length of the payload in the (N-1)^{th} flit in the M^{th} block is L bytes.

In a possible implementation, a corresponding length between the third threshold and the fourth threshold is the same as a length of the second check code.

In a possible implementation, M is greater than 1, and the apparatus further includes: a second generation unit, configured to generate a second data link layer packet, where packet type information of the second data link layer packet indicates that the second data link layer packet is the control packet. The sending unit is specifically configured to separately send the M blocks and the second data link layer packet, where the second data link layer packet is sent after an i^{th} block and before an (i+1)^{th} block, where i is a positive integer greater than or equal to 1 and less than M.

In a possible implementation, the control packet includes a network layer control packet or a data link layer control packet, the network layer control packet is used to control a network layer link of the wired serial bus, and the data link layer control packet is used to control a data link layer link of the wired serial bus.

In a possible implementation, the data packet transmitted across networks includes an Internet protocol version IPv4 protocol packet or an IPv6 protocol packet.

It should be understood that the apparatus for data transmission over the wired serial bus provided in the third aspect of this application is consistent with the technical solution in the first aspect of this application. For specific content and beneficial effect of the apparatus for data transmission over the wired serial bus, refer to the method for data transmission over the wired serial bus provided in the first aspect or the second aspect. Details are not described herein again.

According to a fifth aspect, an embodiment of this application provides an apparatus for data transmission over a wired serial bus. The apparatus is used in a receiver, and the apparatus includes: a receiving unit, configured to receive a first data link layer packet, where the first data link layer packet includes at least one block Block each including a header Header and a body Body, the header includes packet type information indicative of a packet type to which the block belongs, and the packet type is one of a control packet, a data packet transmitted across networks, and a data packet transmitted not across networks; and a processing unit, configured to process the first data link layer packet based on the packet type information.

In a possible implementation, each block includes one or more flits Flits, a 1^{st} flit in each block includes the header and a first check code, and a last flit in each block includes a second check code. The first check code is used to check information in the corresponding 1^{st} flit other than the first check code, and the second check code is used to check information in the corresponding block other than the 1^{st} flit and the second check code.

In a possible implementation, the header in each block further includes a virtual lane number indicative of a corresponding virtual lane over which the block is transmitted.

In a possible implementation, a 1^{st} flit in a 1^{st} block in the at least one block further includes first length information and second length information, the first length information indicates that a quantity of blocks in the at least one block is M, the second length information indicates that a quantity of flits in a last block is N, M is a positive integer, and N is a positive integer.

In a possible implementation, 1^{st} flit in the 1^{st} block further includes third length information, the third length information indicates that a length of a payload in an N^{th} flit or an (N-1)^{th} flit in the last block is L bytes, and L is a positive integer. When L is greater than or equal to a first threshold and less than or equal to a second threshold, the third length information indicates that the length of the payload in the N^{th} flit in an M^{th} block is L bytes; and when L is greater than or equal to a third threshold and less than or equal to a fourth threshold, the third length information indicates that the length of the payload in the (N-1)^{th} flit in the M^{th} block is L bytes.

In a possible implementation, a corresponding length between the third threshold and the fourth threshold is the same as a length of the second check code.

In a possible implementation, M is greater than 1, and the receiving unit is further configured to: after receiving an i^{th} block sent by a first end and before receiving an (i+1)^{th} block sent by the first end, receive a second data link layer packet sent by the first end, where packet type information of the second data link layer packet indicates that the second data link layer packet is the control packet, and i is a positive integer greater than or equal to 1 and less than M.

In a possible implementation, the control packet includes a network layer control packet or a data link layer control packet. The processing unit is specifically configured to: identify the packet type indicated by the packet type information; and when the packet type indicated by the packet type information is the network layer control packet, control a network layer link of the wired serial bus based on the first data link layer packet; or when the packet type indicated by the packet type information is the data link layer control packet, control a data link layer link of the wired serial bus based on the first data link layer packet.

In a possible implementation, the data packet transmitted across networks includes an Internet protocol version IPv4 protocol packet or an IPv6 protocol packet. The processing unit is specifically configured to: identify the packet type indicated by the packet type information; and when the packet type indicated by the packet type information is the Internet protocol version IPv4 protocol packet, forward the first data link layer packet according to an IPv4 protocol; or when the packet type indicated by the packet type information is the IPv6 protocol packet, forward the first data link layer packet according to an IPv6 protocol.

It should be understood that the apparatus for data transmission over the wired serial bus provided in the third aspect of this application is consistent with the technical solution in the second aspect of this application. For specific content and beneficial effect of the apparatus for data transmission over the wired serial bus, refer to the method for data transmission over the wired serial bus provided in the first aspect or the second aspect. Details are not described herein again.

According to a sixth aspect, an embodiment of this application provides a computer-readable storage medium, configured to store computer software instructions used by the apparatus for data transmission over the wired serial bus provided in the fourth aspect or the fifth aspect. The computer-readable storage medium includes a program designed for executing the foregoing aspects.

According to a seventh aspect, an embodiment of this application provides a computer program. The computer program includes instructions. When the computer program is executed by a computer, the computer is caused to perform procedures performed by the apparatus for data transmission over the wired serial bus in the fourth aspect or the fifth aspect.

According to an eighth aspect, an embodiment of this application provides an electronic device. The electronic device includes a processor, and the processor is configured to support the electronic device in implementing corresponding functions in the method for data transmission over the wired serial bus provided in the fourth aspect or the fifth aspect. The electronic device may further include a memory. The memory is configured to be coupled to the processor, and the memory stores program instructions and data that are necessary for the electronic device. The electronic device may further include a communication interface for communication between the electronic device and another device or a communication network over a wired serial bus.

### BRIEF DESCRIPTION OF DRAWINGS

To describe technical solutions in embodiments of this application or in the background more clearly, the following describes accompanying drawings for describing embodiments of this application or the background.
FIG. 1 is a diagram of two existing PCIe devices according to an embodiment of this application;
FIG. 2 is a diagram of a wired network transmission application scenario according to an embodiment of this application;
FIG. 3 is a diagram of two node devices according to an embodiment of this application;
FIG. 4 is a diagram of an architecture of a system for data transmission over a wired serial bus according to an embodiment of this application;
FIG. 5 shows a method for data transmission over a wired serial bus according to an embodiment of this application;
FIG. 6 is a diagram of a structure of a data link layer packet according to an embodiment of this application;
FIG. 7 is a diagram of a structure of another data link layer packet according to an embodiment of this application;
FIG. 8 is a diagram of a virtual lane according to an embodiment of this application;
FIG. 9 is a diagram of structures of a 1^{st} flit in different blocks according to an embodiment of this application;
FIG. 10 is a diagram of structures of last two flits in a tail block according to an embodiment of this application;
FIG. 11 is a diagram of a structure of an apparatus for data transmission over a wired serial bus according to an embodiment of this application; and
FIG. 12 is a diagram of a structure of another apparatus for data transmission over a wired serial bus according to an embodiment of this application.

### DESCRIPTION OF EMBODIMENTS

The following describes embodiments of this application with reference to accompanying drawings in embodiments of this application.

In the specification, claims, and the accompanying drawings of this application, terms such as "first", "second", "third", and "fourth" are intended to distinguish between different objects but do not describe a particular order. In addition, terms "include", "have", and any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item)" refers to one or more and "multiple" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

An "embodiment" mentioned in this specification means that a particular characteristic, structure, or feature described with reference to embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with another system by using the signal).

First, for ease of understanding embodiments of this application, the following specifically analyzes a technical problem to be resolved in embodiments of this application and application scenarios.

In a modern computing system, an interconnect bus is responsible for high-speed and efficient interconnection between multiple cores in a processor and a storage subsystem, an accelerator, a peripheral, and the like, to meet a requirement of high-performance heterogeneous computing. For example, a peripheral interface (Peripheral Component Interface Express, PCIe) bus, namely, a high-speed differential bus is used to implement end-to-end transmission. By virtue of high performance, high scalability, high reliability, and excellent compatibility, the PCIe almost replaces all previous internal buses. However, with explosive growth of data and development of heterogeneous computing, to maintain memory consistency between memory space in the processor and a memory in a connected device, a compute express link (Compute Express Link, CXL)-PCIe bus becomes a new technical trend.

The PCIe supports multiple data routing manners like a multi-channel-based data transfer manner and a packet-based data transfer manner, and fully takes a quality of service (Quality of Service, QoS) problem during data transmission into consideration. After the CXL feature is introduced, memory consistency may also be extended to be supported. However, because an original design of the PCIe is mainly for interconnect express in a computing system, neither the PCIe nor the CXL-PCIe can implement interconnection and memory consistency maintenance of PCIe devices across Internet protocol (Internet Protocol, IP) networks.

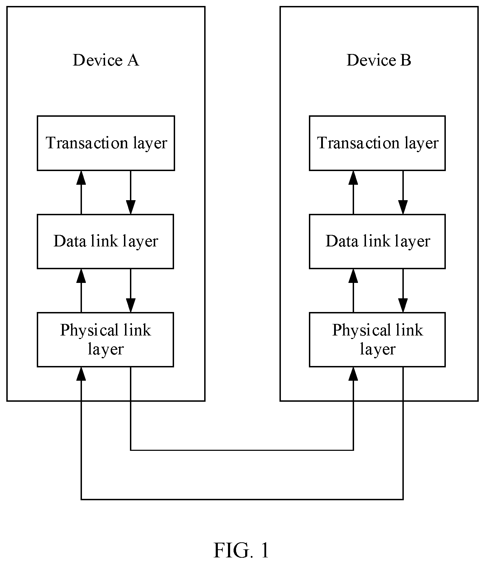

FIG. 1 is a diagram of two existing PCIe devices according to an embodiment of this application. As shown in FIG. 1, the two PCIe devices are a device A and a device B. The device A and the device B each include a PCIe core hardware/software interface (PCIe Core Hardware/Software Interface), a transaction layer (Transaction Layer), a data link layer (Data Link Layer), and a physical layer (Physical Layer). The device A and the device B are interconnected through a wired serial bus. However, because the device A and the device B do not involve a network layer and do not have an IP, for a data link layer packet transmitted between the device A and the device B, only a control/management packet at a data link layer and a data packet need to be sent, and management of a network layer and network layer type information of data are not defined. Consequently, the data link layer packet cannot adapt itself to be transmitted in IP networks.

Therefore, embodiments of this application provide a method and system for data transmission over a wired serial bus, and a related apparatus. The communication method is applied to the field of communication technologies, and in particular, to the method for data transmission over a wired serial bus. According to the method for data transmission over the wired serial bus, end-to-end transmission of a data link layer packet across IP networks or in a local network can be implemented. The data link layer packet includes at least one block each including a header and a body, the header includes packet type information indicative of a packet type to which the block belongs. Therefore, a receiver can identify, based on the packet type, whether the data link layer packet is a data link layer packet transmitted in the local network or a data link layer packet transmitted across IP networks, so as to perform different processing. For a specific implementation, refer to descriptions in the following embodiments. Details are not described herein in embodiments of this application.

Based on the foregoing technical problems, the following first describes a wired network transmission application scenario on which embodiments of this application are based, for ease of understanding of embodiments of this application.

The wired network transmission scenario includes a computing system in a local network and a computing system across local networks. The computing system across the local networks is a distributed computing system formed by computing systems collaborating in two or more different local networks. The computing system across the local networks includes multiple computing systems and/or node devices with different IP addresses, and data transmission between different IP addresses needs to be routed over IP networks. Therefore, the computing system across the local networks may also be referred to as a computing system across IP networks. The computing system and/or a node device in the local network may be a server, or the like. The computing system and/or the node device in each local network may each include one or more processing units, an accelerator, an image processing unit, a computing node, a storage node, and the like. Data transmission in the local network may be implemented between different nodes (for example, the computing node and the storage node, and the computing node and the accelerator) in the computing system and/or the node device in the local network. Data transmission across IP networks may be implemented between computing systems and node devices in different local networks.

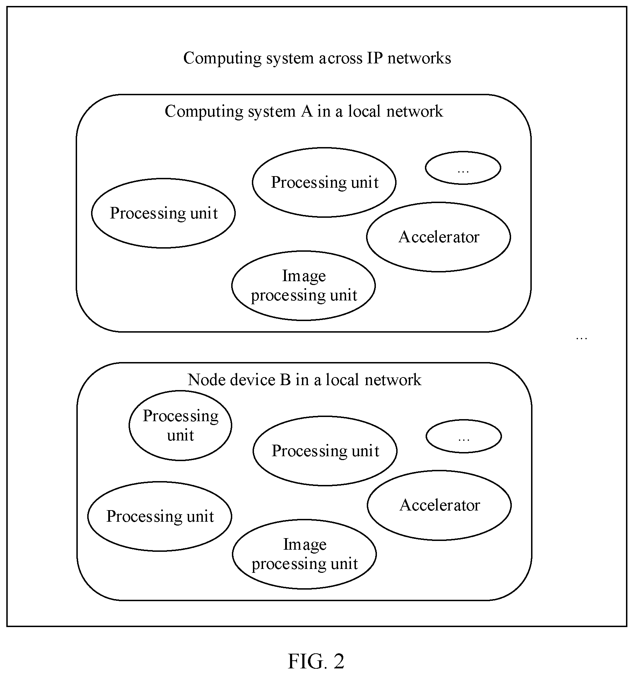

For example, FIG. 2 is a diagram of a wired network transmission application scenario according to an embodiment of this application. As shown in FIG. 2, the computing system across IP networks includes multiple computing systems in local networks and node devices in local networks, for example, a computing system A in the local network and a node device B in the local network. Data transmission over the wired serial bus between processing units, an accelerator, and the like in each of the computing system A in the local network and the node device B in the local network is data transmission in the local network. Data transmission over the wired serial bus between the processing unit in the computing system A in the local network and the processing unit in the node device B in the local network is data transmission across IP networks.

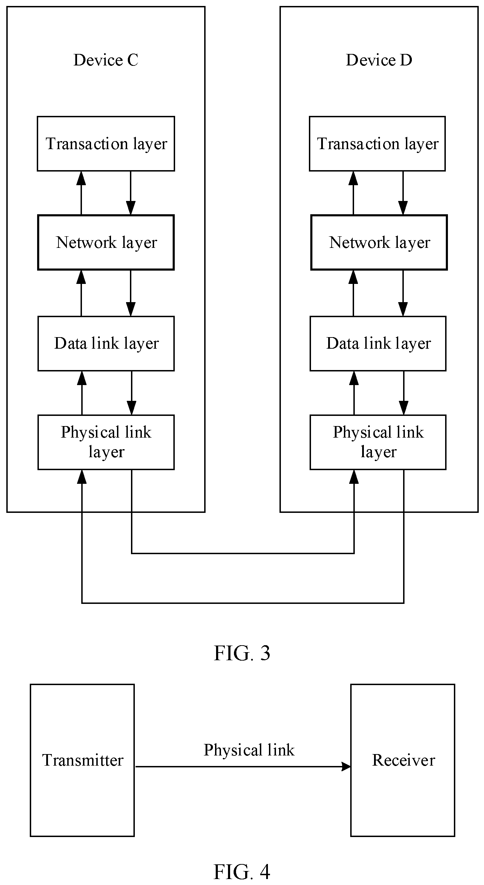

The method for data transmission over the wired serial bus mentioned in embodiments of this application may be applied to the wired network transmission scenario shown in FIG. 2. Based on the foregoing application scenario, FIG. 3 is a diagram of two node devices according to an embodiment of this application. As shown in FIG. 3, an embodiment of this application provides two node devices (for example, a device C and a device D). The device C and the device D may be respectively equivalent to the computing system A in the local network and the node device B in the local network in the computing system across IP networks; or may be respectively equivalent to different processing units, accelerators, image processing units, or the like in the computing system A in the local network or the node device B in the local network. Compared with the two PCIe devices (for example, the device A and the device B) shown in FIG. 1, the device C and the device D further support a network layer. A data link layer packet transmitted between the device C and the device D may not only include a control/management packet at a data link layer and a data packet, but also include a control/management packet for the network layer and network layer type information of data.

Therefore, in embodiments of this application, data transmission of the data link layer packet can be implemented in a local network and across IP networks, to implement high-performance and low-latency connection and cache coherence maintenance of node devices across IP networks, and more efficiently provide computing invocation, data access, resource scheduling, and a communication mechanism. For a specific implementation, refer to descriptions in the following embodiments. Details are not described herein in embodiments of this application.

It should be noted that the method for data transmission over the wired serial bus in embodiments of this application is not limited to data transmission over the wired serial bus between PCIe devices, and is further applicable to another new bus, for example, a unified bus, another computing system that supports a local network and a computing system across IP networks, or a new computing bus in another heterogeneous network.

Based on the foregoing technical problems and the corresponding application scenarios, the following first describes an architecture of a system for data transmission over a wired serial bus on which embodiments of this application are based, for ease of understanding of embodiments of this application.

FIG. 4 is a diagram of an architecture of a system for data transmission over a wired serial bus according to an embodiment of this application. The system for data transmission over the wired serial bus may be used in the wired network transmission scenario shown in FIG. 2. As shown in FIG. 4, a structure of the system for data transmission over the wired serial bus includes a transmitter and a receiver. The transmitter and the receiver may be different processing units in a computing system in a same local network, or may be different processing units in computing systems, in different local networks, in a computing system across IP networks. For example, the transmitter and the receiver may be different high-performance computing nodes, the transmitter and the receiver may be a computing node and a storage node, or the transmitter and the receiver may respectively belong to a computing node and an accelerator. Data transmission is performed between the transmitter and the receiver, to implement memory consistency maintenance. The transmitter and the receiver may each include a corresponding input/output IO controller, a bus, and another apparatus.

As shown in FIG. 4, wired serial bus data transmission may be implemented between the transmitter and the receiver through a physical link. In embodiments of this application, the transmitter is configured to send a data link layer packet to the peer end, and the receiver is configured to receive a data link layer packet sent by the peer end. Embodiments of this application describe only a transmitter-to-receiver sending method and system. During actual application, unidirectional sending or bidirectional sending may be implemented between the two nodes, that is, the node serves as both a transmitter and a receiver. This is not specifically limited in embodiments of this application. For a specific implementation, refer to descriptions in the following embodiments. Details are not described herein in embodiments of this application.

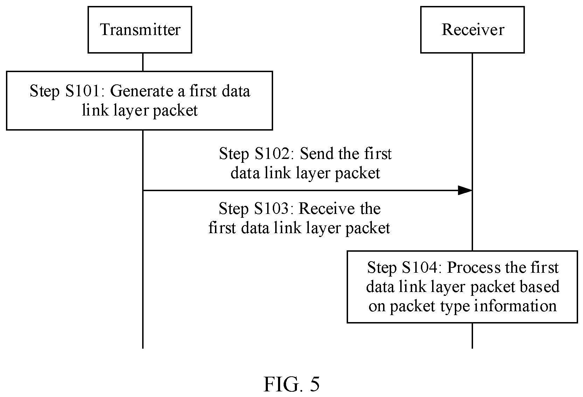

According to the method for data transmission over the wired serial bus provided in this application, the following specifically analyzes and resolves the technical problems proposed in this application. FIG. 5 shows a method for data transmission over a wired serial bus according to an embodiment of this application. The method may be applied to the communication system architecture in FIG. 4. The transmitter may be configured to support and perform step S101 and step S102 in a method procedure shown in FIG. 5, and the receiver may be configured to support and perform step S103 and step S104 in the method procedure shown in FIG. 5.

Step S101: Generate a first data link layer packet.

Specifically, the transmitter generates the first data link layer packet. The first data link layer packet includes at least one block Block each including a header Header and a body Body, the header includes packet type information indicative of a packet type to which the block belongs, and the packet type is one of a control packet, a data packet transmitted across networks, and a data packet transmitted not across networks. The data packet transmitted across networks may be a data transmission packet between computing nodes or processing units in computing systems in different local networks, and the data packet transmitted not across networks may be a data transmission packet between different computing nodes or processing units in a computing system in a local network.

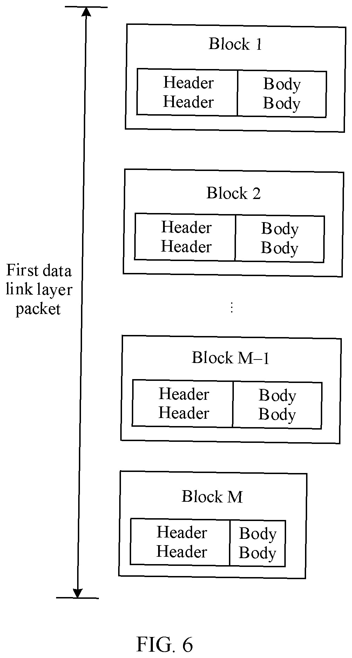

FIG. 6 is a diagram of a structure of a data link layer packet according to an embodiment of this application. As shown in FIG. 6, the data link layer packet may be the first data link layer packet, and includes at least one block Block each including a header Header and a body Body. The header information is usually located in a front part of the block, and includes some description information of the block, for example, packet type information and a virtual lane corresponding to the packet. The header in some blocks may further include length information and the like. The body part usually includes to-be-transmitted service data. In addition, extension information may be indicated by the header part, or may be included in the body part. The extension information is used to provide more information about the packet in addition to the header part, for example, information of a network layer above the link layer or other information.

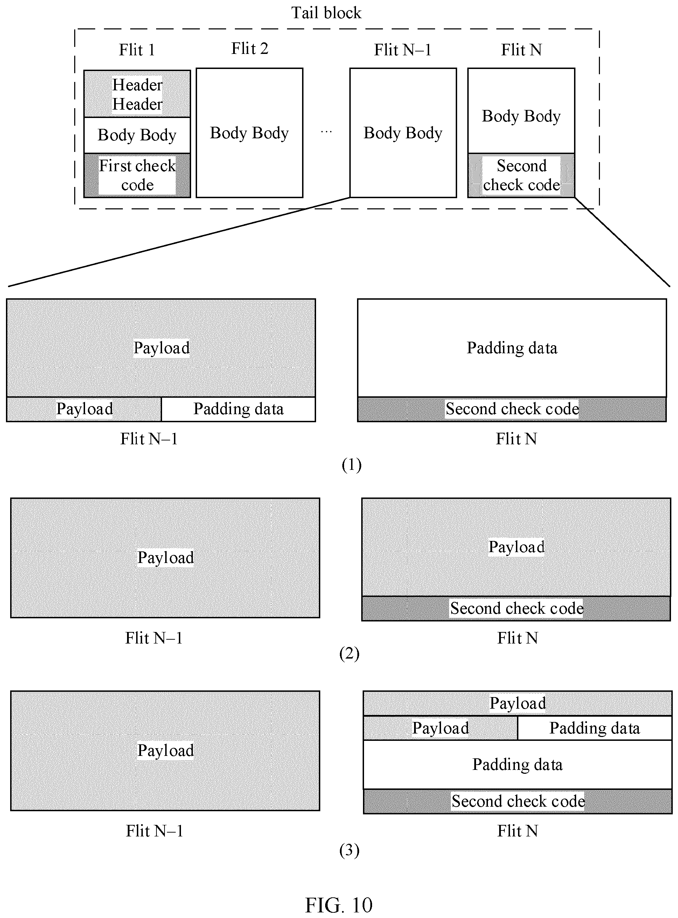

For example, the header Header includes the packet type information indicative of the packet type to which the block belongs, and the packet type is one of the control packet, the data packet transmitted across networks, and the data packet transmitted not across networks. The control packet may be a link management packet. The data packet transmitted across networks is a data packet across a computing system in a local network, that is, cross IP networks. The data packet transmitted not across networks is a data packet that is in a computing system in a local network and that does not cross IP networks. The body Body includes a payload and null payload. The payload is service data that needs to be transferred between computing nodes. The null payload is usually a part for padding a tail of the payload that does not meet a specified length, to ensure that a complete packet, block, or flit structure is transmitted. For details, refer to the following related embodiment shown in FIG. 10. Details are not described herein in this embodiment of this application.

In addition, when a packet length of the first data link layer packet is less than or equal to a preset block length, the first data link layer packet may include one block, and the packet length of the first data link layer packet is a length of the block. When the packet length of the first data link layer packet is greater than the preset block length, the first data link layer packet may be segmented into blocks by the preset block length, so that the first data link layer packet may include multiple blocks. Except that a length of a last block in the plurality of blocks is less than or equal to the preset block length, lengths of all remaining blocks are the same, and a length of each of the remaining blocks is the preset block length. For example, as shown in FIG. 6, a length of a block M is less than the preset block length, and a length of a block 1 to a length of a block M-1 are all equal to the preset packet length.

For another example, when the preset block length is 640 bytes (Byte), and the packet length of the first data link layer packet is greater than 640*5 bytes and less than 640*6 bytes, the first data link layer packet may include five blocks, lengths of first four blocks are all 640 bytes, and a length of the fifth block may be less than 640 bytes. The preset block length is not specifically limited in embodiments of this application. For example, the preset block length may alternatively be 320 bytes or 1280 bytes.

The packet length of the first data link layer packet needs to be less than or equal to a preset threshold. A value of the preset threshold may be determined according to a transmission protocol of wired serial bus data transmission. This is not specifically limited in embodiments of this application. For example, the preset threshold may be 512*20 bytes.

It should be further noted that all blocks in the first data link layer packet belong to a same packet type. Therefore, the packet type information also indicates a packet type of the first data link layer packet to which a corresponding block belongs.

Optionally, each block includes one or more flits Flits, a 1^{st} flit in each block includes the header and a first check code, and a last flit in each block includes a second check code. The first check code is used to check information in the corresponding 1^{st} flit other than the first check code, and the second check code is used to check information in the corresponding block other than the 1^{st} flit and the second check code.

It should be noted that, in embodiments of this application, a minimum transmission unit of the segmented first data link layer packet is a flit Flit, and one flit has a fixed preset byte length. For example, when the preset byte length is 20 bytes, one flit has a fixed length of 20 bytes. Because each block (other than a last block) has the fixed preset packet length, each block other than the last block includes a same quantity of flits. For example, when a maximum length of the first data link layer packet that can be transmitted at the data link layer is a length of 512 flits, and the preset packet length is a length of 32 flits, when the length of the first data link layer packet is greater than 32 flits, the first data link layer packet is segmented into a maximum of 16 blocks for transmission. A length of each block is 32 flits (other than the last block), and remaining flits are transmitted in the last block. When the length of the first data link layer packet is less than or equal to 32 flits, the first data link layer packet is transmitted in one block, and a length of the block is less than or equal to 32 flits.

It should be further noted that, because one flit has a fixed preset byte length, when data (payload) in the flit is insufficient to fill the preset byte length, padding (Padding, PAD) data may be used to pad an insufficient part of the flit, and the padding data may be data with a fixed feature, for example, all 0s or all 1s, or other data with a fixed feature specified in a protocol. In other words, the padding data may be understood as padding data.

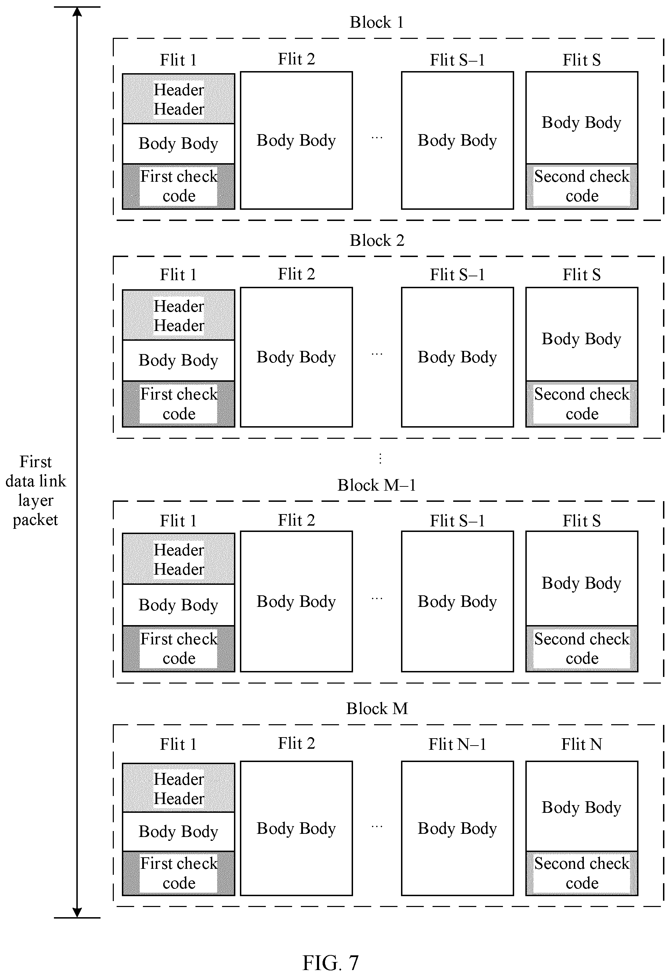

FIG. 7 is a diagram of a structure of another data link layer packet according to an embodiment of this application. As shown in FIG. 7, each block in the first data link layer packet includes one or more flits, and a preset packet length of the block is a length of S flits. For example, a block 1 to a block M-1 each include S flits, a block M includes N remaining flits in the first data link layer packet, S is an integer greater than or equal to N, and N is an integer greater than or equal to 1.

As shown in FIG. 7, a 1^{st} flit (namely, a flit 1) in each block includes a header and a first check code, and may further include a partial body of the entire block. A last flit (namely, a flit S or a flit N) includes a second check code, and may further include a partial body of the entire block. The first check code in the 1^{st} flit in each block is used to check information in the corresponding 1^{st} flit other than the first check code. For example, the first check code in the flit 1 in the block 1 is used to check the header and the body in the flit 1 in the block 1. The second check code in the last flit in each block is used to check information in the corresponding block other than the 1^{st} flit and the second check code. For example, the second check code in the flit S in the block 1 is used to check a body in a flit 2 to a body in a flit S-1 and the body in the flit S in the block 1.

Therefore, in addition to the header carrying packet type information, the 1^{st} flit in each block further includes the first check code used to check the 1^{st} flit. The last flit in each block includes the second check code used to check the information in the corresponding block. Therefore, the receiver checks the corresponding block based on the first check code and the second check code, and if a quality of service problem like a loss, repetition, or an error occurs in the block received by the receiver during transmission, the transmitter is enabled to resend the first data link layer packet or the block, to ensure quality of service during transmission.

It should be noted that a check method is not specifically limited in embodiments of this application. For example, the first check code and the second check code may be check codes of cyclic redundancy check (Cyclic Redundancy Check, CRC).

Optionally, the header in each block further includes a virtual lane number indicative of a corresponding virtual lane over which the block is transmitted.

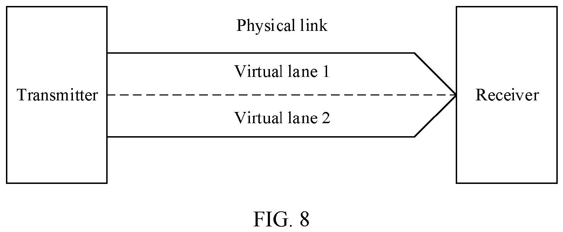

The header (namely, the header in the 1^{st} flit) in each block further includes the virtual lane number indicative of the corresponding virtual lane over which the block is transmitted. FIG. 8 is a diagram of a virtual lane according to an embodiment of this application. As shown in FIG. 8, the virtual lane may be one virtual lane in one or more virtual lanes obtained through division based on a physical link between the transmitter and the receiver. Each virtual lane may be used to transmit the first data link layer packet, and each virtual lane may correspond to a different packet transmission rate and/or a different packet buffer size. For example, as shown in FIG. 8, the physical link between the transmitter and the receiver is divided into two virtual lanes: a virtual lane 1 and a virtual lane 2. The virtual lane 1 and the virtual lane 2 correspond to different buffers of the receiver, and/or different buffer sizes. Correspondingly, packet transmission rates at which the first data link layer packet is transmitted through the virtual lane 1 and the virtual lane 2 are also different. The transmitter may select, based on the virtual lane number corresponding to each block, a corresponding virtual lane to send the block. Therefore, the virtual lane number in the block is identified, and the block is sent to the receiver over the corresponding virtual lane, to ensure a transmission rate of the block and quality of service during transmission.

In some other embodiments, the virtual lane number may be identified by a field name VL. For example, when VL=1, it may indicate the virtual lane 1.

Optionally, a 1^{st} flit in a 1^{st} block in the at least one block further includes first length information and second length information, the first length information indicates that a quantity of blocks in the at least one block is M, the second length information indicates that a quantity of flits in a last block is N, M is a positive integer, and N is a positive integer.

Each flit has the fixed preset byte length, and each block (other than the last block) has the fixed preset packet length. Therefore, the 1^{st} flit in the first block further needs to include the first length information and the second length information, and the first length information and the second length information respectively indicate the quantity of blocks in the first data link layer packet and the quantity of flits in the last block in the first data link layer packet. For example, when the first length information, carried in the 1^{st} flit in the first block, indicative of the quantity of blocks is 10, it indicates that the first data link layer packet includes 10 blocks. When the second length information, carried in the 1^{st} flit in the first block, indicative of the quantity of flits in the last block is 22, it indicates that a tenth block in the 10 blocks includes 22 flits, the remaining first block to the ninth block include flits (that is, greater than or equal to 22 flits) with a length corresponding to the preset packet length, for example, 32 flits. In embodiments of this application, the first length information and the second length information carried in the 1^{st} flit in the first block can ensure integrity and accuracy of the received first data link layer packet, to ensure quality of service during data transmission.

In some other embodiments, when the first length information (which may be identified by Plength[a:b]) Plength[a:b] ranges from 0 to 15, it may indicate that the quantity M of blocks ranges from 1 to 16. When the second length information (which may be identified by Plength[c:d]) Plength[c:d] ranges from 0 to 31, it may indicate that the quantity N of flits in the last block ranges from 1 to 32. Plength is a field name of the length information, and [a:b] and [c:d] are respectively used to identify storage locations or storage sizes of the first length information and the second length information in the header.

In addition, the first length information and the second length information may be included in the header in the 1^{st} flit in the first block. It should be noted that, in this embodiment and the following related embodiments of this application, the first block in the segmented first data link layer packet may be referred to as a header block, the last block may be referred to as a tail block, and the remaining blocks may be referred to as intermediate blocks.

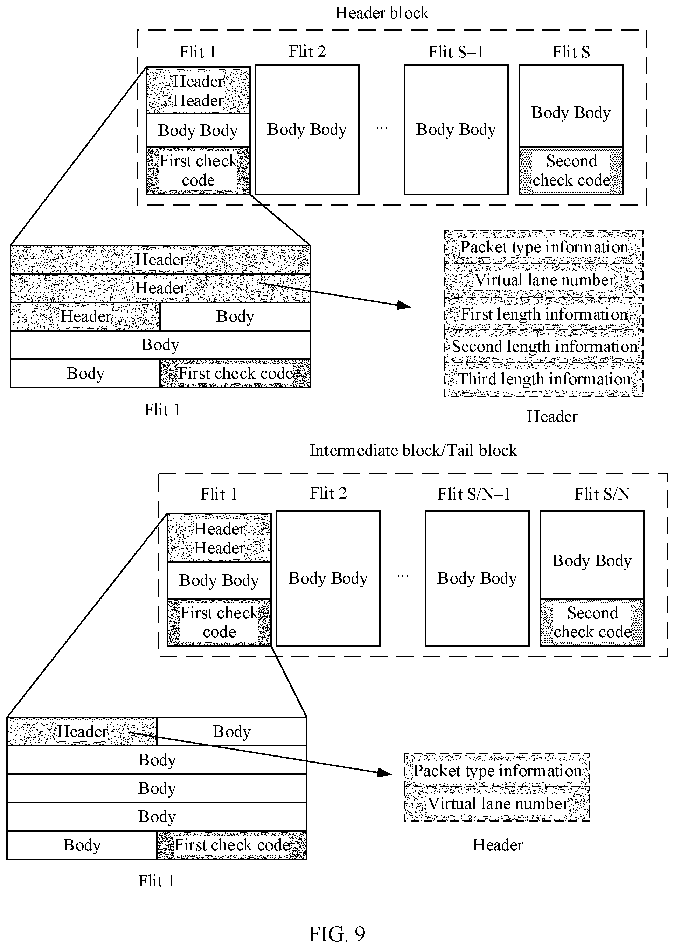

FIG. 9 is a diagram of structures of 1^{st} flit in different blocks according to an embodiment of this application. Information carried in a header in the header block is different from information carried in a header in another block (the intermediate block and the tail block). In addition to the packet type information and the virtual lane number, the header in the header block further includes the length information, and the length information includes the first length information and the second length information. Correspondingly, as shown in FIG. 9, a byte length, in the 1^{st} flit, of the header in the 1^{st} flit in the header block is greater than a byte length, in the 1^{st} flit, of the header in the 1^{st} flit in another block (the intermediate block and the tail block).

Optionally, 1^{st} flit in the 1^{st} block further includes third length information, the third length information indicates that a length of a payload in the N^{th} flit or an (N-1)^{th} flit in the last block is L bytes, and L is a positive integer. When L is greater than or equal to a first threshold and less than or equal to a second threshold, the third length information indicates that the length of the payload in the N^{th} flit in an M^{th} block is L bytes; and when L is greater than or equal to a third threshold and less than or equal to a fourth threshold, the third length information indicates that the length of the payload in the (N-1)^{th} flit in the M^{th} block is L bytes.

Because each flit has the fixed preset byte length, when data in the last flit is insufficient to fill the preset byte length, padding (Padding, PAD) data may be used to pad an insufficient part of the flit, and the padding data may be data with a fixed feature, for example, all 0s or all 1s, or other data with a fixed feature specified in a protocol. Correspondingly, the padding data may be understood as null payload. In other words, the body in the last block may include the payload and the null payload. The payload includes data (for example, one or more of audio data, text data, image data, or data of another type) that needs to be transmitted in the first data link layer packet, and the receiver may process the payload. The null payload includes the padding data for padding the insufficient part of the flit.

As shown in FIG. 9, the third length information may alternatively be included in the header in the 1^{st} flit in the first block. The third length information indicates that the length of the payload in the N^{th} flit or the (N-1)^{th} flit in the last block is L bytes, and L is a positive integer, that is, the third length information indicates the length of the payload in the last flit or the last but one flit in the tail block. The third length information can be used to ensure integrity and accuracy of the received first data link layer packet, to further ensure quality of service during data transmission.

FIG. 10 is a diagram of structures of last two flits in a tail block according to an embodiment of this application. Because the second check code is located in the last flit in the tail block, a sum of the length of the payload in the current last flit and a length of the second check code is greater than the fixed length (namely, the preset byte length) of the flit, and the length of the payload is less than or equal to the fixed length of the flit (in other words, the length of the payload is insufficient to form a complete flit), padding needs to be performed to form a new last flit, and the original last flit is used as the last but one flit. In this case, as shown in (1) in FIG. 10, the new last flit includes the second check code and a null payload, and the last but one flit includes the payload and a null payload. When the sum of the length of the payload in the current last flit and the length of the second check code is equal to the fixed length (namely, the preset byte length) of the flit, no padding is performed for a new flit. In this case, as shown in (2) in FIG. 10, the current last flit includes the payload and the second check code. When the sum of the length of the payload in the current last flit and the length of the second check code is less than the fixed length (namely, the preset byte length) of the flit, no padding is performed for a new flit, and padding (Padding, PAD) data is used to pad only an insufficient part of the current last flit. In this case, as shown in (3) in FIG. 10, the last flit includes the payload, the null payload, and the second check code.

When L, namely, the length of the payload, is greater than or equal to the first threshold and less than or equal to the second threshold, the third length information indicates that the length of the payload in the N^{th} flit in the M^{th} block is L bytes, that is, the third length information indicates the length of the payload in the last flit in the tail block (as shown in (2) and (3) in FIG. 10). When L is greater than or equal to the third threshold and less than or equal to the fourth threshold, the third length information indicates that the length of the payload in the (N-1)^{th} flit in the M^{th} block is L bytes, that is, the third length information indicates the length of the payload in the last but one flit in the tail block (as shown in (1) in FIG. 10).

It should be noted that the first threshold, the second threshold, the third threshold, and the fourth threshold are different. The first threshold is less than the second threshold, the second threshold is less than the third threshold, and the third threshold is less than the fourth threshold.

Optionally, a corresponding length between the third threshold and the fourth threshold is the same as the length of the second check code. An indicated length between the first threshold and the second threshold is equivalent to a value obtained by subtracting the length of the second check code from the fixed length (namely, the preset byte length) of the flit. An indicated length between the third threshold and the fourth threshold is equivalent to the length of the second check code.

Because all flits have a same size, when the length of the payload indicated by the third length information is between the third threshold and the fourth threshold, it indicates that when carrying the payload of the length in the last flit cannot ensure integrity of the second check code. Therefore, the payload of the length is carried in the last but one flit, and the second check code is carried in the last flit, to ensure integrity of the second check code. Correspondingly, in embodiments of this application, a value between the third threshold and the fourth threshold may be equivalent to a value of the second check code, to ensure integrity of the second check code.

For example, when the fixed length of the flit is 40 bytes, and the length of the second check code is 4 bytes, the corresponding length between the first threshold and the second threshold is 36 bytes, and the corresponding length between the third threshold and the fourth threshold is 4 bytes. For example, the first threshold may indicate a value of 1 byte, the second threshold may indicate a value of 36 bytes, the third threshold may indicate a value of 37 bytes, and the fourth threshold may indicate a value of 40 bytes. When the value of L indicates 7 bytes, it indicates that L is between the first threshold and the second threshold. Therefore, the third length information indicates that the length of the payload in the last flit in the tail block is 7 bytes. When the value of L indicates 37 bytes, it indicates that L is between the third threshold and the fourth threshold. Therefore, the third length information indicates that the length of the payload in the last but one flit in the tail block is 37 bytes.

In some other embodiments, when the third length information (which may be identified by Plength[e:f]) Plength[e:f] ranges from 0 to 15, it indicates that the length L of the payload in the last flit in the tail block ranges from 1 to 16. In this case, the first threshold is 0, indicating a value of 1 byte; and the second threshold is 15, indicating a value of 16 bytes. When Plength[e:f] ranges from 16 to 19, it indicates that the length L of the payload in the last but one flit in the tail block ranges from 17 to 20. In this case, the third threshold is 16, indicating a value of 17 bytes; and the fourth threshold is 19, indicating a value of 20 bytes. When L is compared with the first threshold, the second threshold, the third threshold, and the fourth threshold, L is compared with a correspondingly indicated byte value. Plength is a field name of the length information, and [e:f] is used to identify a storage location of the third length information in the header.

Step S102: Send the first data link layer packet.

Specifically, the transmitter sends the first data link layer packet to the receiver.

Optionally, M is greater than 1, and the method further includes: generating a second data link layer packet, where packet type information of the second data link layer packet indicates that the second data link layer packet is the control packet. Sending the first data link layer packet includes: separately sending the M blocks and the second data link layer packet, where the second data link layer packet is sent after an i^{th} block and before an (i+1)^{th} block, where i is a positive integer greater than or equal to 1 and less than M.

Because the data link layer packet provided in embodiments of this application is a segmented data link layer packet, blocks may be separately sent. Therefore, in a process of sending the first data link layer packet in blocks, after a current block is sent, in comparison with continuing to send a next block, the control packet (namely, the second data link layer packet) may be preferentially sent based on a sending status (for example, the quantity of blocks in the first data link layer packet is large, or time for sending all blocks in the first data link layer packet is long), and a remaining block in the first data link layer packet continues to be sent after the control packet is sent. In this manner, the receiver can receive the control packet as soon as possible to maintain or manage a transmission link between the transmitter and the receiver, to implement efficient data transmission. For example, after the i^{th} block is sent, the second data link layer packet is preferentially sent, and a remaining block in the first data link layer packet continues to be sent after the second data link layer packet is sent.

In addition, it may be understood that, in the process of sending the first data link layer packet, the second data link layer packet is also sent, and different data link layer packets are usually transmitted through different virtual lanes. Therefore, different data link layer packets correspond to different virtual lane numbers. Therefore, in some other possible embodiments, the first length information may further indicate that a quantity of blocks corresponding to the virtual lane numbers is M.

Optionally, the control packet includes a network layer control packet or a data link layer control packet, the network layer control packet is used to control a network layer link of the wired serial bus, and the data link layer control packet is used to control a data link layer link of the wired serial bus. When the first data link layer packet is the control packet, that is, the packet type information carried in the header in the block indicates that the block belongs to the control packet, the first data link layer packet may be classified into two types: the network layer control packet or the data link layer control packet, so that the control packet can correspondingly complete functions such as status management, credit flow control, parameter exchange, power management, and retransmission of the data link layer link or the network layer link.

For example, when the packet type information carried in the header in the block indicates that the block belongs to the network layer control packet, the receiver may manage or control the network layer link between the receiver and the transmitter based on bodies in some or all blocks in the first data link layer packet. When the packet type information carried in the header in the block indicates that the block belongs to the data link layer control packet, the receiver may manage or control the data link layer link between the receiver and the transmitter based on bodies in some or all blocks in the first data link layer packet.

The status management means whether a status of the data link layer link or the network layer link is a connected state, a state in which data can be transmitted, and the like. The credit flow control is a mechanism used by the receiver to control an amount of data that can still be sent by the transmitter or a size of data that can still be sent by the transmitter, to avoid overflow of the receiver or insufficient storage space of the buffer. The parameter exchange is link parameter exchange of the data link layer link or the network layer link between the transmitter and the receiver. The power management means whether the transmitter or the receiver enables an operation like power saving. The retransmission means whether retransmission needs to be performed at the data link layer.

Optionally, the data packet transmitted across networks includes an Internet protocol version IPv4 protocol packet, an IPv6 protocol packet, or a cross-IP network protocol packet. The data packet transmitted across networks is a data packet that is applicable to different network protocols such as an IPv4 protocol, an IPv6 protocol, or another network protocol and that is transmitted between computing systems across IP networks.

Therefore, the data packet transmitted across networks at the data link layer may include either the Internet protocol version IPv4 protocol packet or the IPv6 protocol packet. For example, when the packet type information carried in the header in the block indicates that the block belongs to the Internet protocol version IPv4 protocol packet, it indicates that the first data link layer packet may be transmitted in a network executing the Internet protocol version IPv4. When the packet type information carried in the header in the block indicates that the block belongs to the Internet protocol version IPv6 protocol packet, it indicates that the first data link layer packet may be transmitted in a network executing the Internet protocol version IPv6.

In addition, it should be noted that, when the first data link layer packet is the data packet transmitted across networks, network information corresponding to the Internet protocol version IPv4 protocol packet or the IPv6 protocol packet may appear only in the first block, or may appear in each block. This is not specifically limited in embodiments of this application.

Optionally, the data packet transmitted not across networks at the data link layer includes the data packet. The data packet transmitted not across networks is transmitted only in a local network, and does not involve network transmission at an IP layer. Therefore, a difference between the data packet transmitted not across networks and the data packet transmitted across networks lies in whether the packet is transmitted across IP networks. The packet transmitted not across networks may further include a protocol packet of a computing system in the local network, to indicate that the first data link layer packet is a data link layer packet applicable to transmission inside the computing system in the local network.

The data packet may include one or more of audio data, text data, image data, or data of another type.

In some other embodiments, the packet type information may be identified by a field name CFG, so that the receiver identifies different values corresponding to the field name CFG, to determine a packet type to which a received block belongs. For example, when CFG=A, it may indicate that the block is a data link layer control packet. When CFG=B, it may indicate that the block is a network layer control packet. When CFG=C, it may indicate that the block is an IPv4 protocol packet. When CFG=D, it may indicate that the block is an IPv6 protocol packet. When CFG=E, it may indicate that the block is a data packet. When CFG=F, it may indicate that the block is another protocol packet in the local network or across IP networks.

In some other embodiments, the header in the first block in the first data link layer packet may further include other identification information indicating the first data link layer packet. This is not specifically limited in embodiments of this application. For example, the header in the first block may further include credit information (which may be identified by a field name CRD) indicating whether a credit is returned in the packet, release information (which may be identified by a field name ACK) indicating whether space of the packet is released, a virtual lane number (which may be identified by a field name CRD-VL) indicating the corresponding returned credit, and the like. The credit is used to control traffic during data transmission.

Step S103: Receive the first data link layer packet.

Specifically, the receiver receives the first data link layer packet.

Step S104: Process the first data link layer packet based on the packet type information.

Specifically, the receiver processes the first data link layer packet based on the packet type information. For example, the receiver performs format identification and field parsing based on the packet type information of the first data link layer packet, and perform forwarding, termination, or other processing on the first data link layer packet.

Optionally, the receiver identifies the packet type indicated by the packet type information; and when the packet type indicated by the packet type information is the network layer control packet, controls the network layer link of the wired serial bus based on the first data link layer packet. The receiver identifies the packet type indicated by the packet type information; and when the packet type indicated by the packet type information is the data link layer control packet, controls the data link layer link of the wired serial bus based on the first data link layer packet.

Optionally, the receiver identifies the packet type indicated by the packet type information; and when the packet type indicated by the packet type information is the Internet protocol version IPv4 protocol packet, forwards the first data link layer packet according to the IPv4 protocol. The receiver identifies the packet type indicated by the packet type information; and when the packet type indicated by the packet type information is the IPv6 protocol packet, forwards the first data link layer packet according to the IPv6 protocol.

Optionally, the receiver identifies the packet type indicated by the packet type information; and when the packet type indicated by the packet type information is the data packet, processes the data packet.

Optionally, M is greater than 1, and the method further includes: after receiving an i^{th} block sent by a first end and before receiving an (i+1)^{th} block sent by the first end, receiving a second data link layer packet sent by the first end, where packet type information of the second data link layer packet indicates that the second data link layer packet is the control packet, and i is a positive integer greater than or equal to 1 and less than M. In a process of receiving the first data link layer packet, the receiver may further receive the control packet, to maintain or manage the link between the transmitter and the receiver.

In embodiments of this application, both data transmission in the local network and data transmission across IP networks can be implemented, and high-performance and low-latency connection and cache coherence maintenance between different ends or different node devices are implemented. A segmented data link layer packet (namely, the first data link layer packet) may be transmitted over the wired serial bus. The segmented data link layer packet includes at least one block, and each block includes a header Header and a body Body. The header includes packet type information, and the packet type information may indicate a packet type to which the corresponding block belongs, and may further indicate the packet type corresponding to the segmented data link layer packet. Therefore, the receiver can identify, based on the packet type, that the data link layer packet is the control packet, the data link layer packet in the local network (namely, the data packet transmitted not across networks), or the data link layer packet transmitted across IP networks (namely, the data packet transmitted across networks). Further, the receiver may perform corresponding processing on the received data link layer packet based on the identified packet type, to implement end-to-end transmission across networks or in the local network, and meet high-performance and low-latency connection and cache coherence maintenance in various application scenarios. In addition, in embodiments of this application, a packet format of the data link layer packet transmitted across networks is the same as a packet format of the data link layer packet transmitted not across networks, to greatly reduce complexity of a system for data transmission over a wired serial bus. In addition, because the data link layer packet provided in embodiments of this application is a segmented data link layer packet, the blocks may be separately sent, to ensure quality of service when the data link layer packet is transmitted over the wired serial bus.

The foregoing describes the method in embodiments of this application in detail. The following provides a related apparatus in embodiments of this application.

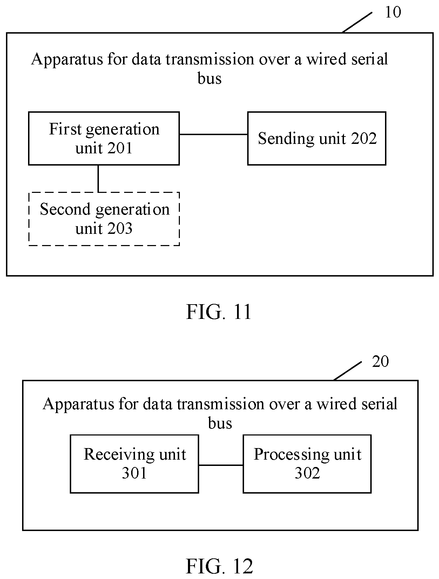

FIG. 11 is a diagram of a structure of an apparatus for data transmission over a wired serial bus according to an embodiment of this application.

As shown in FIG. 11, the apparatus 10 for data transmission over the wired serial bus is used in the transmitter shown in FIG. 4, and the transmitter and the receiver perform data transmission over the wired serial bus. The apparatus 10 for data transmission over the wired serial bus may include a first generation unit 201 and a sending unit 202, and may further include a second generation unit 203. Detailed descriptions of the units are as follows:

The first generation unit 201 is configured to generate a first data link layer packet. The first data link layer packet includes at least one block Block each including a header Header and a body Body, the header includes packet type information indicative of a packet type to which the block belongs, and the packet type is one of a control packet, a data packet transmitted across networks, and a data packet transmitted not across networks.

The sending unit 202 is configured to send the first data link layer packet.

In a possible implementation, each block includes one or more flits Flits, a 1^{st} flit in each block includes the header and a first check code, and a last flit in each block includes a second check code. The first check code is used to check information in the corresponding 1^{st} flit other than the first check code, and the second check code is used to check information in the corresponding block other than the 1^{st} flit and the second check code.

In a possible implementation, the header in each block further includes a virtual lane number indicative of a corresponding virtual lane over which the block is transmitted.

In a possible implementation, a 1^{st} flit in a 1^{st} block in the at least one block further includes first length information and second length information, the first length information indicates that a quantity of blocks in the at least one block is M, the second length information indicates that a quantity of flits in a last block is N, M is a positive integer, and N is a positive integer.

In a possible implementation, 1^{st} flit in the 1^{st} block further includes third length information, the third length information indicates that a length of a payload in an N^{th} flit or an (N-1)^{th} flit in the last block is L bytes, and L is a positive integer. When L is greater than or equal to a first threshold and less than or equal to a second threshold, the third length information indicates that the length of the payload in the N^{th} flit in an M^{th} block is L bytes; and when L is greater than or equal to a third threshold and less than or equal to a fourth threshold, the third length information indicates that the length of the payload in the (N-1)^{th} flit in the M^{th} block is L bytes.

In a possible implementation, a corresponding length between the third threshold and the fourth threshold is the same as a length of the second check code.

In a possible implementation, M is greater than 1, and the apparatus further includes: the second generation unit 203, configured to generate a second data link layer packet, where packet type information of the second data link layer packet indicates that the second data link layer packet is the control packet. The sending unit 202 is specifically configured to separately send the M blocks and the second data link layer packet, where the second data link layer packet is sent after an i^{th} block and before an (i+1)^{th} block, where i is a positive integer greater than or equal to 1 and less than M.

In a possible implementation, the control packet includes a network layer control packet or a data link layer control packet, the network layer control packet is used to control a network layer link of the wired serial bus, and the data link layer control packet is used to control a data link layer link of the wired serial bus.

In a possible implementation, the data packet transmitted across networks includes an Internet protocol version IPv4 protocol packet or an IPv6 protocol packet.

It should be noted that, for functions of functional modules of the apparatus 10 for data transmission over the wired serial bus described in embodiments of this application, refer to related descriptions of step S101 and step S102 in the method embodiments described in FIG. 5 to FIG. 10. Details are not described herein.

FIG. 12 is a diagram of a structure of another apparatus for data transmission over a wired serial bus according to an embodiment of this application.

As shown in FIG. 12, the apparatus 20 for data transmission over the wired serial bus is used in the receiver shown in FIG. 4, and the transmitter and the receiver perform data transmission over the wired serial bus. The apparatus 20 for data transmission over the wired serial bus may include a receiving unit 301 and a processing unit 302. Detailed descriptions of the units are as follows:
The receiving unit 301 is configured to receive a first data link layer packet. The first data link layer packet includes at least one block Block each including a header Header and a body Body, the header includes packet type information indicative of a packet type to which the block belongs, and the packet type is one of a control packet, a data packet transmitted across networks, and a data packet transmitted not across networks.

The processing unit 302 is configured to process the first data link layer packet based on the packet type information.

In a possible implementation, each block includes one or more flits Flits, a 1^{st} flit in each block includes the header and a first check code, and a last flit in each block includes a second check code. The first check code is used to check information in the corresponding 1^{st} flit other than the first check code, and the second check code is used to check information in the corresponding block other than the 1^{st} flit and the second check code.

In a possible implementation, the header in each block further includes a virtual lane number indicative of a corresponding virtual lane over which the block is transmitted.

In a possible implementation, a 1^{st} flit in a 1^{st} block in the at least one block further includes first length information and second length information, the first length information indicates that a quantity of blocks in the at least one block is M, the second length information indicates that a quantity of flits in a last block is N, M is a positive integer, and N is a positive integer.

In a possible implementation, 1^{st} flit in the 1^{st} block further includes third length information, the third length information indicates that a length of a payload in an N^{th} flit or an (N-1)^{th} flit in the last block is L bytes, and L is a positive integer. When L is greater than or equal to a first threshold and less than or equal to a second threshold, the third length information indicates that the length of the payload in the N^{th} flit in an M^{th} block is L bytes; and when L is greater than or equal to a third threshold and less than or equal to a fourth threshold, the third length information indicates that the length of the payload in the (N-1)^{th} flit in the M^{th} block is L bytes.

In a possible implementation, a corresponding length between the third threshold and the fourth threshold is the same as a length of the second check code.

In a possible implementation, M is greater than 1, and the receiving unit 301 is further configured to: after receiving an i^{th} block sent by a first end and before receiving an (i+1)^{th} block sent by the first end, receive a second data link layer packet sent by the first end, where packet type information of the second data link layer packet indicates that the second data link layer packet is the control packet, and i is a positive integer greater than or equal to 1 and less than M.

In a possible implementation, the control packet includes a network layer control packet or a data link layer control packet. The processing unit 302 is specifically configured to: identify the packet type indicated by the packet type information; and when the packet type indicated by the packet type information is the network layer control packet, control a network layer link of the wired serial bus based on the first data link layer packet; or when the packet type indicated by the packet type information is the data link layer control packet, control a data link layer link of the wired serial bus based on the first data link layer packet.

In a possible implementation, the data packet transmitted across networks includes an Internet protocol version IPv4 protocol packet or an IPv6 protocol packet. The processing unit 302 is specifically configured to: identify the packet type indicated by the packet type information; and when the packet type indicated by the packet type information is the Internet protocol version IPv4 protocol packet, forward the first data link layer packet according to an IPv4 protocol; or when the packet type indicated by the packet type information is the IPv6 protocol packet, forward the first data link layer packet according to an IPv6 protocol.

It should be understood that the apparatus for data transmission over the wired serial bus provided in the third aspect of this application is consistent with the technical solution in the second aspect of this application. For specific content and beneficial effect of the apparatus for data transmission over the wired serial bus, refer to the method for data transmission over the wired serial bus provided in the first aspect or the second aspect. Details are not described herein again.

It should be noted that, for functions of functional modules of the apparatus 20 for data transmission over the wired serial bus described in embodiments of this application, refer to related descriptions of step S103 and step S104 in the method embodiments described in FIG. 5 to FIG. 10. Details are not described herein.

In the foregoing embodiments, descriptions of embodiments have respective focuses. For a part that is not described in detail in an embodiment, refer to related descriptions in other embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to preferred embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division during actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on multiple network units. Some or all of the units may be selected based on actual requirements to achieve objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to conventional technologies, or all or some of the technical solutions may be implemented in the form of a software product. The computer software product is stored in a storage medium and includes several instructions for instructing a computer device (which may be a personal computer, a server, a network device, or the like, and may specifically be a processor in the computer device) to perform all or some of the steps of the methods described in embodiments of this application. The foregoing storage medium includes any medium that can store program code, such as a USB flash drive, a removable hard disk, a magnetic disk, an optical disc, a read-only memory (Read-Only Memory, ROM for short), or a random access memory (Random Access Memory, RAM for short).

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the spirit and scope of the technical solutions of embodiments of this application.

## Claims

1. A method for data transmission over a wired serial bus, applied to a transmitter, wherein the method comprises:
generating a first data link layer packet, wherein the first data link layer packet comprises at least one block Block each comprising a header Header and a body Body, the header comprises packet type information indicative of a packet type to which the block belongs, and the packet type is one of a control packet, a data packet transmitted across networks, and a data packet transmitted not across networks; and
sending the first data link layer packet.

2. The method according to claim 1, wherein the header in each block comprises a virtual lane number indicative of a corresponding virtual lane over which the block is transmitted.

3. The method according to claim 2, wherein each block comprises one or more flits Flits; and
a 1^{st} flit in a 1^{st} block in the at least one block comprises first length information and second length information, the first length information indicates that a quantity of blocks in the at least one block is M, the second length information indicates that a quantity of flits in a last block is N, M is a positive integer, and N is a positive integer.

4. The method according to claim 3, wherein the 1^{st} flit in the 1^{st} block further comprises third length information, the third length information indicates that a length of a payload in an N^{th} flit or an (N-1)^{th} flit in the last block is L bytes, and L is a positive integer; and
when L is greater than or equal to a first threshold and less than or equal to a second threshold, the third length information indicates that the length of the payload in the N^{th} flit in an M^{th} block is L bytes; and when L is greater than or equal to a third threshold and less than or equal to a fourth threshold, the third length information indicates that the length of the payload in the (N-1)^{th} flit in the M^{th} block is L bytes.

5. The method according to claim 3, wherein M is greater than 1, and the method further comprises:
generating a second data link layer packet, wherein packet type information of the second data link layer packet indicates that the second data link layer packet is the control packet; and
sending the first data link layer packet comprises:
separately sending the M blocks and the second data link layer packet, wherein
the second data link layer packet is sent after an i^{th} block and before an (i+1)^{th} block, wherein i is a positive integer greater than or equal to 1 and less than M.

6. The method according to any one of claims 1 to 5, wherein the control packet comprises a network layer control packet or a data link layer control packet, the network layer control packet is used to control a network layer link of the wired serial bus, and the data link layer control packet is used to control a data link layer link of the wired serial bus.

7. The method according to claim 6, wherein the data packet transmitted across networks comprises an Internet protocol version IPv4 protocol packet or an IPv6 protocol packet.

8. A method for data transmission over a wired serial bus, applied to a receiver, wherein the method comprises:
receiving a first data link layer packet, wherein the first data link layer packet comprises at least one block Block each comprising a header Header and a body Body, the header comprises packet type information indicative of a packet type to which the block belongs, and the packet type is one of a control packet, a data packet transmitted across networks, and a data packet transmitted not across networks; and
processing the first data link layer packet based on the packet type information.

9. The method according to claim 8, wherein the control packet comprises a network layer control packet or a data link layer control packet; and
processing the first data link layer packet based on the packet type information comprises:
identifying the packet type indicated by the packet type information; and
when the packet type indicated by the packet type information is the network layer control packet, controlling a network layer link of the wired serial bus based on the first data link layer packet; or
when the packet type indicated by the packet type information is the data link layer control packet, controlling a data link layer link of the wired serial bus based on the first data link layer packet.

10. The method according to claim 8 or 9, wherein the data packet transmitted across networks comprises an Internet protocol version IPv4 protocol packet or an IPv6 protocol packet; and
processing the first data link layer packet based on the packet type information comprises:
identifying the packet type indicated by the packet type information; and
when the packet type indicated by the packet type information is the Internet protocol version IPv4 protocol packet, forwarding the first data link layer packet according to an IPv4 protocol; or
when the packet type indicated by the packet type information is the IPv6 protocol packet, forwarding the first data link layer packet according to an IPv6 protocol.

11. A system for data transmission over a wired serial bus, wherein the system comprises a transmitter and a receiver, the transmitter and the receiver perform data transmission over the wired serial bus, the transmitter is configured to perform the method according to any one of claims 1 to 7, and the receiver is configured to perform the method according to any one of claims 8 to 10.

12. An apparatus for data transmission over a wired serial bus, wherein the apparatus is used in a transmitter, and the apparatus comprises:
a first generation unit, configured to generate a first data link layer packet, wherein the first data link layer packet comprises at least one block Block each comprising a header Header and a body Body, the header comprises packet type information indicative of a packet type to which the block belongs, and the packet type is one of a control packet, a data packet transmitted across networks, and a data packet transmitted not across networks; and
a sending unit, configured to send the first data link layer packet.

13. An apparatus for data transmission over a wired serial bus, wherein the apparatus is used in a receiver, and the apparatus comprises:
a receiving unit, configured to receive a first data link layer packet, wherein the first data link layer packet comprises at least one block Block each comprising a header Header and a body Body, the header comprises packet type information indicative of a packet type to which the block belongs, and the packet type is one of a control packet, a data packet transmitted across networks, and a data packet transmitted not across networks; and
a processing unit, configured to process the first data link layer packet based on the packet type information.

14. A computer program product, wherein the computer program product comprises a computer program, and when the computer program is executed by a computer or a processor, the computer or the processor is caused to perform the method according to any one of claims 1 to 7 or the method according to any one of claims 8 to 10.

15. A computer-readable storage medium, wherein the computer-readable storage medium stores a computer program, and when the computer program is executed by a computer or a processor, the method according to any one of claims 1 to 7 or the method according to claim 9 or 10 is implemented.
